## Europäisches Patentamt

## European Patent Office

## Office européen des brevets

(11) Veröffentlichungsnummer: **0 218 237**
**B1**

(12) **EUROPÄISCHE PATENTSCHRIFT**

(45) Veröffentlichungstag der Patentschrifft:
17.01.90

(21) Anmeldenummer: **86113896.4**

(22) Anmeldetag: **07.10.86**

(51) Int. Cl.⁴: **B 65 G 17/20, E 01 B 25/24**

(54) Laufschiene.

(30) Priorität: **07.10.85 DE 3535758**

(43) Veröffentlichungstag der Anmeldung:
**15.04.87 Patentblatt 87/16**

(45) Bekanntmachung des Hinweises auf die Patenterteilung:
**17.01.90 Patentblatt 90/03**

㊸ Bennante Vertragsstaaten:
**AT CH FR GB IT LI**

(56) Entgegenhaltungen:
**EP-A-0 139 915**
**EP-A-0 164 109**
**DE-A-1 940 256**
**DE-A-3 401 183**
**FR-A-1 142 174**

(73) Patentinhaber: **VEIT TRANSPO GMBH**
**Rudolf-Diesel-Strasse 3**
**D-8910 Landsberg/Lech (DE)**

(72) Erfinder: **Hafner, Josef, Dipl.-Ing.**
**Garmischer Strasse 47**
**D-8038 Gröbenzell (DE)**
Erfinder: **Bergmeier, Werner, Dipl.-Ing.**
**Meggendorferstrasse 22**
**D-8000 München 50 (DE)**
Erfinder: **Schönenberger, Rolf, Dipl.-Ing. Dipl. Wirtsch. Ing**
**Herzogstandstrasse 7**
**D-8910 Landsberg/Lech (DE)**

(74) Vertreter: **Patentanwälte Grünecker, Kinkeldey, Stockmair & Partner**
**Maximilianstrasse 58**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

**Beschreibung**

Die Erfindung betrifft eine Laufschiene der im Gattungsbegriff des Patentanspruchs 1 angegebenen Art.

Eine aus der Praxis bekannte Laufschiene ist ein Stahl-Winkelprofil mit zwischen den Schenkeln offener Unterseite, das im Förderstreckenprofil durch den Tragsteg bildende Stegabschnitte mit einem, z. B. als Rundrohr ausgebildeten, Endlos-Stahlprofil verschweißt ist. Die Herstellung einer solchen Förderstrecke ist aufwendig, da sie sozusagen aus Einzelteilen maßgefertigt wird. Die Laufschiene kann nur mit mittenabgehängten Laufrollenpaaren befahren werden. Die offene Unterseite der Laufschiene gestattet zwar das Aushängen des Laufrollenpaares; andererseits bedingt sie das Anbringen zusätzlicher Bauteile, um sicherheitsbedingt in Aushängesperr-Abschnitten der Förderstrecke das Aushängen zu verhindern. Durch das offene Winkelprofil der Laufschiene entsteht ein großes Drehmoment und eine hohe Materialbelastung bzw. Materialanhäufung an der Oberseite der Laufschiene. Das Gewicht der Laufschiene und auch einer Längeneinheit der Förderstrecke ist konstruktionsbedingt hoch. Aufgrund der horizontalen Asymmetrie der Laufschiene müssen Auf- und Abwärtsbögen unterschiedlich gefertigt werden. Der Schweißverzug beim Herstellen einer Förderstrecke bewirkt große Fertigungstoleranzen. Auch kann die exakt senkrechte Lage der Symmetrieebene der Laufschiene nach der Montage nicht gewährleistet werden. Durch das hohe Gewicht der Laufschiene und der Förderstrecke entstehen hohe Transportkosten. Durch das Material der Laufschiene bedingt ist teurer Korrosionsschutz erforderlich. In Verbindungs- oder Stoßbereichen einer Förderstrecke sind unterschiedliche Verbindungselemente für den Haltesteg und die Laufschiene erforderlich.

Eine ähnliche Laufschiene ist aus der DE-A1-1 940 256 bekannt. Diese besteht aus Rundrohrabschnitten, die mit dem als T-Vollprofil ausgebildeten Tragprofil durch in Abständen angeordnete Schraubbolzen und Spannschlösser verbunden sind. Der Außendurchmesser der Rundrohrabschnitte ist größer als die Aushängspaltweite der Laufrollen. In Aushängebereichen einer solchen Förderstrecke sind entweder Ausnehmungen in der Unterseite des Rundrohrquerschnittes oder eingesetzte Winkelprofile vorgesehen, deren offene Seite nach unten weist, so daß die Rollenbügel seitlich herausdrehbar sind. Der Herstellungsaufwand solcher Förderstrecken ist beträchtlich. Die Belastbarkeit der Laufschiene variiert sehr.

In der EP-A1-0 164 109 mit älterem Zeitrang im Sinne des Art. 54(3) EPÜ wird eine Laufschiene vorgeschlagen, die aus einem quadratischen Vierkantrohr besteht, das mit vertikal stehender Querschnittsdiagonale in der Förderstrecke festgelegt wird. Das Eckmaß des Vierkantrohres ist größer als die Aushängespaltweite der Laufrollen.

Der Erfindung liegt die Aufgabe zugrunde eine Laufschiene der eingangs genannten Art zu schaffen, die für unterschiedliche Einsatzzwecke universell verwendbar und dabei stabiler, tragfähiger und leichter ist, als die bekannte.

Die Aufgabe wird erfindungsgemäß durch die im kennzeichnenden Teil des Patentanspruchs 1 angegebenen Merkmale gelöst.

Mit dem Quersteg wird ein Hohlprofil geschaffen, das eine höhere Belastbarkeit der Laufschiene gewährleistet, so daß die Laufschiene leichter ausgebildet werden kann, als die bekannte. Der Quersteg führt mit den Schenkeln und dem Hohlraum zu einem günstigen Trägheits- und Widerstandsmoment der Laufschiene. Der Quersteg sichert auch einen gleichbleibenden Abstand der Schenkel, was die Ausbildung von Auf- und Abwärtsbögen begünstigt. Die Belastung der Laufschiene ist im oberen Verbindungsbereich der Schenkel verringert, weil sich der darunterliegende Quersteg zusätzlich seitlich versteifend auswirkt.

Eine zweckmäßige Ausführungsform geht aus Anspruch 2 hervor. Bei dieser Ausbildung wird trotz hoher Belastbarkeit eine verhältnismäßig niedrige Schienenhöhe erreicht. Eine Materialanhäufung im Verbindungsbereich der Schenkel ist vermieden. Die Lage der neutralen Faser innerhalb des Querschnittes der Laufschiene läßt sich genau vorherbestimmen bzw. die neutrale Faser in eine für die Belastung günstige Position legen.

Gemäß Anspruch 3 wird eine hochbelastbare Verbindung zwischen dem Haltesteg und der Laufschiene geschaffen und gewährleistet, daß die Symmetrieebene der Laufschiene genau senkrecht steht. Der angeformte Tragsteg erspart die mühselige Verbindung der Laufschiene mit den Tragstegabschnitten.

Gemäß Anspruch 4 können die Belastbarkeit einer Förderstrecke sowie das Gewicht pro Längeneinheit auch durch Größe und Anzahl der Durchbrechungen vorherbestimmt werden. Die Lage bestimmter Durchbrechungen führt wegen der Abstandsbemessung zwischen dem Durchbrechungsrand und der Unterseite des Querstegs von vornherein, z. B., zu Aushängebereichen der Förderstrecke. Die Breite der Laufrollenbahnen bzw. der Schenkel kann dabei durchaus größer sein als die Aushängespaltweite.

Mit Anspruch 5 ergibt sich eine für das Aushängen günstig geringe Laufschienenhöhe, so daß die bis zum Quersteg offene Unterseite der Laufschiene zum Aushängen des Laufrollenpaares nicht ganz genutzt zu werden braucht, was das Aushängen vereinfacht. Es kann der Quersteg die freien Schenkelenden sogar unmittelbar miteinander verbinden. Die durch den niedrig liegenden Durchbrechungsrand gewonnene Höhe kann dem Querschnitt oder der Breite der Laufschiene zugute kommen.

In einem Aushängesperrabschnitt ist gemäß Anspruch 6 von vornherein ohne zusätzliche Maßnahmen kein Aushängen des Laufrollenpaares mehr möglich.

Gemäß Anspruch 7 beeinträchtigen die Längsnuten die Gestaltfestigkeit und Belastbarkeit der Laufschiene nicht spürbar; sie gestatten jedoch das Anbringen und Lagesichern von Zusatzeinrichtungen. Dazu kommt, daß sie im Steg eine Elastizität in Hochrichtung erzeugen.

Die Vorsprünge gemäß Anspruch 8 führen dort zur Materialkonzentration im Querschnitt, wo sie für die Belastbarkeit, das Trägheits- und das Widerstandsmoment der Laufschiene günstig sind.

Belastungen von an den Vorsprüngen angreifenden Abhängungen oder Abstützungen verteilen sich gemäß Anspruch 9 großflächig.

Die hinterschnittene Nut gemäß Anspruch 10 innerhalb des Querschnitts der Laufschiene ist für sekundäre Aufgaben bestimmt, z. B. zum An- oder Einbringen von Zusatzeinrichtungen oder Haltestücken, die dann in Längsrichtung der Laufschiene verschiebbar und beliebig festlegbar sind.

Zweckmäßig ist auch das Merkmal von Anspruch 11, da an den Führungs- oder Auflageflächen bewegliche oder eingeschobene Teile sauber abgestützt und geführt werden.

Bei den Ausführungsformen der Ansprüche 7 bis 11 ist es günstig, daß, z. B. in den Längsnuten, Schleifleitungen oder Versorgungskabel untergebracht werden können, oder auch Kunststoffauflagen für die Rollenlaufbahnen, die dann unten in die Nut der Laufschiene zusätzlich eingehängt werden. Die Flächen an den Fortsätzen der Schenkelenden können bei anderer Einbaulage der Laufschiene Teile von Rollenlaufbahnen anders gestalteter oder abgehängter Laufrollen sein. Auch an den Auflageflächen an der Unterseite des Querstegs können bei anderer Einbaulage der Laufschiene Rollen laufen. Es wird sozusagen eine Laufschiene mit komplexem Profilgeschaffen, das den Einsatz der Laufschiene für verschiedene und mit der Konzeption einer Förderstrecke entstehende Anwendungen gestattet.

Die im Hohlraum untergebrachte Längsarmierung gemäß Anspruch 12 erhöht die Belastbarkeit der Laufschiene oder des Streckenprofils. Es können dazu in den Hohlraum Armierungsstreifen oder Bänder eingezogen und gegebenenfalls eingegossen oder eingeschäumt sein.

Mit der zusätzlichen Schiene gemäß Anspruch 13, die spiegelbildlich entweder an der Laufschiene oder am Tragprofil angebracht wird, und zwar unter Nutzung der Formgebung der Profile, läßt sich die Belastbarkeit des Förderstreckenprofils entweder durchgehend oder auch nur abschnittsweise erhöhen. Im Sinne des Baukastenprinzips hat auch die zusätzliche Schiene das Profil der Laufschiene.

Bei dem Laufschienenprofil besteht gemäß Anspruch 14 die Möglichkeit, zusätzlich und gleichzeitig auch andere Laufrollensystem einsetzen zu können.

Eine weitere bedeutsame Ausführungsform ist in Anspruch 15 enthalten. Es kann das Laufschienenprofil von vornherein für mehrere Rollenbügelsysteme passend konzipiert sein, wobei die Laufbahn der kompatiblen Systeme die Rollenbügel des jeweils anderen Systems nicht behindern.

Der Sperrteil gemäß Anspruch 16 kann nachträglich angebracht oder entfernt werden. Es gestattet die Formgebung der Laufschiene nach diesem Baukastenprinzip auch einfache nachträgliche Änderungen des Systems, z. B zur Anpassung an sich ändernde Betriebsvoraussetzungen.

Gemäß Anspruch 17 ist ein unwillkürliches Aushängen zuverlässig vermieden,, ein willkürliches Aushängen hingegen jederzeit möglich.

Gemäß Anspruch 18 werden Befestigungsmittel, eine Abhängung oder eine Abstützung für die Förderstrecke an der Laufschiene angebracht. Die im Betrieb auftretenden Belastungen werden von den Längsnuten über die Befestigungsmittel an die Abstützung der Förderstrecke übertragen. Auch die Kupplung aneinander stoßender Förderstreckenabschnitte ist vereinfacht, weil, z. B. stiftförmige, Kupplungselemente nur in die Längsnuten eingesteckt zu werden brauchen und dann selbsttätig dafür sorgen, daß die Laufschienen sich nicht relativ zueinander versetzen.

Alternativ ist Anspruch 19 wichtig, weil in den Längsnuten angeordnete Halterungen die Zusatzeinrichtungen besonders einfach festlegen lassen.

Gemäß Anspruch 20 werden ohne aufwendige Befestigungs- oder Justiermittel in den Nuten der Profile Vorlauf und Rücklauf eines Antriebs untergebracht.

Leichtmetall oder Leichtmetallegierungen sind gemäß Anspruch 21 einfach und preiswert mit dem gewünschten Querschnittsprofil und praktisch unendlich zu extrudieren, wobei ein solches Strangpreßprofil formgenau, korrosionsunempfindlich, leichtgewichtig, verschleißfest und optisch ansprechend ist. Die spezifisch geringere Belastbarkeit des Materials verglichen mit Stahl wird durch den Querschnitt der Laufschiene mehr als kompensiert.

Alternativ ist auch die Ausführung gemäß Anspruch 22 denkbar, wobei die Gewichtsersparnis gegenüber aus Stahl geschweißten Konstruktionen sowie die vereinfachte Herstellung der Förderstrecke ins Gewicht fallen.

Für leichtere Betriebsbedingungen sind gemäß Anspruch 23 auch Kunststofflaufschienen brauchbar. Bei Kunststoff kann der Hohlraum, den der Quersteg mit den Schenkeln begrenzt, armiert sein oder auch die Schenkel selbst. Kunststoff führt zu leisem Laufgeräusch der Laufrollen. Kurven sind wegen der Elastizität besonders einfach zu bilden.

Anhand der Zeichnungen werden nachstehend Ausführungsformen der Erfindung erläutert. Es zeigen:

Fig. 1   einen Querschnitt durch eine Laufschiene,

Fig. 2   eine perspektivische Querschnittsansicht eines Hängeförder-Laufstreckenprofils, das die Laufschiene von Fig. 1 einstückig enthält,

Fig. 3a,b   Querschnitte zweier abgewandelter Hängeförder-Laufstreckenprofile   mit erhöhter Belastbarkeit,

Fig. 4a,b die Laufschiene von Fig. 1 in zwei Querschnittsdarstellungen mit Zusatzteilen,

Fig.5a,b,c die Laufschiene von Fig. 1 mit anderen Zusatzteilen,

Fig. 6a,b die Laufschiene von Fig. 1 mit weiteren Zusatzteilen, jeweils im Querschnitt,

Fig. 7 einen Querschnitt durch eine Hängeförderstrecke mit einer Zusatzfunktion,

Fig. 8 einen Querschnitt durch eine Förderstrecke mit daran befestigten Zusatzteilen,

Fig. 10 einen Querschnitt durch eine Hängeförderstrecke mit Zusatzeinrichtungen,

Fig. 11 einen Querschnitt durch eine Schräg-Hängeförderstrecke mit Zusatzeinrichtungen,

Fig. 12a,b Querschnitte durch eine Behälterförderstrecke mit liegendem Laufstreckenprofil.

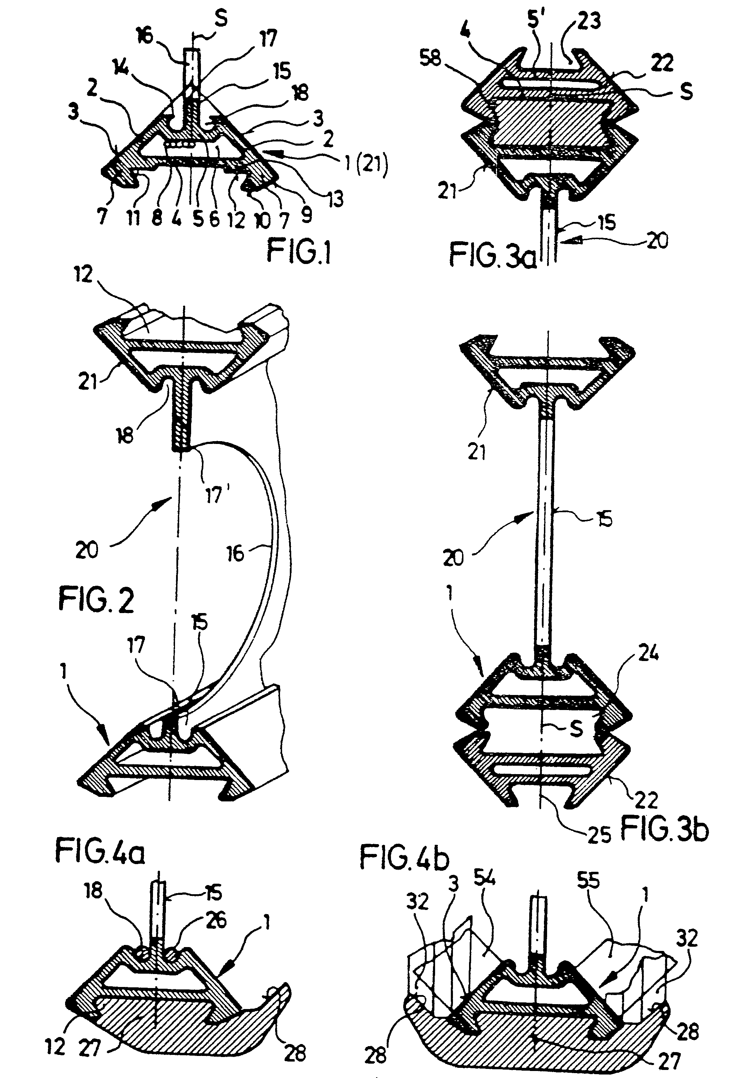

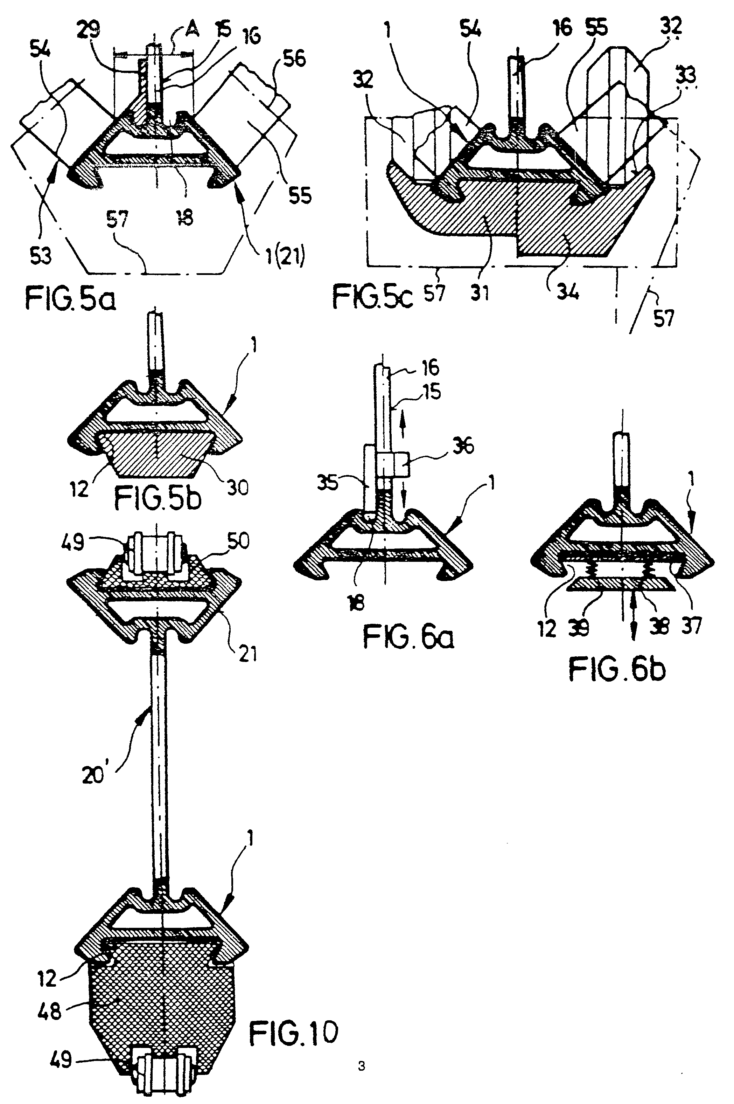

Eine Laufschiene 1 gemäß Fig. 1, beispielsweise ein aus Leichtmetall- oder einer Leichtmetallegierung bestehendes Strangguß- oder -preßprofil, ist entweder für sich alleine verwendbar oder gemäß Fig. 2 mit einem Tragsteg 15 und einem zur Laufschiene 1 spiegelbildlichen Tragprofil 21 einstückig in ein Laufstreckenprofil 20 integriert. Die Laufschiene 1 gemäß Fig. 1 besitzt zwei nach oben dachförmig zusammenlaufende Schenkel 2, die außenseitig Laufbahnen 3 für, z. B. in Fig. 5a gezeigte, Laufrollen 54 und 55 eines Laufrollenpaares 53 bilden, die in einem ihre schräg stehenden Achsen 56 miteinander Verbindenden Bügel 57 gehalten sind, an dem nicht-dargestellte Transportmittel hängen. Der Bügel 57 hat unterhalb der Laufschiene 1 eine das Ausheben und Aushängen der Laufrollen 54, 55 gestattende Ausnehmung. Die Laufschiene 1 ist seitensymmetrisch bezüglich einer vertikalen Symmetrieebene S. Senkrecht zur Symmetrieebene S verbindet die Schenkel 2 ein Quersteg 4. Die Schenkel 2 enden oben in einem Querabstand zur Symmetrieebene S und werden durch einen Steg 5 miteinander verbunden, der annähernd parallel zum Quersteg 4 verläuft. Der Quersteg 4 begrenzt mit den Innenseiten der Schenkel 2 und des Stegs 5 einen Hohlraum 6, in dem gegebenenfalls Längsarmierungen 8, z. B. eingebettet oder eingegossen sind. Der freie Hohlraum 6 ist zum Unterbringen von Versorgungsleitungen oder dergl. nutzbar.

An den freien Enden der Schenkel 2 sind Vorsprünge 7 angeformt, die schräge Führungsflächen 9 sowie zum Quersteg 4 parallele Führungsflächen 10 besitzen. Der Winkel, den die Führungsflächen 9 mit der Symmetrieebene S einschließen beträgt 60°, während der Winkel zwischen den Rollenlaufbahnen 3 und der Symmetrieebene S ca. 45° beträgt. Die Vorsprünge 7 begrenzen mit dem Quersteg 4 eine zur Unterseite der Laufschiene 1 offene Schwalbenschwanznut 12, die durch hinterschnittene Flächen 11 außen begrenzt wird. An der Unterseite des Quersteges 4 können an die Flächen 11 angrenzende Führungsflächen 13 angeformt sein.

Der Steg 5 hat bei dieser Ausführung eine ebene obere Fläche 14 und ist einstückig mit einem Tragsteg 15 vereinigt, der in der Symmetrieebene S nach oben verläuft. Beiderseits des Tragstegs 15 sind Längsnuten 18 in den Steg 15 eingeformt, die zweckmäßigerweise hinterschnitten sind.

Der Tragsteg 15 enthält Durchbrechungen 16, wobei der untere Durchbrechungsrand 17 unterhalb des gedachten Schnittpunktes der Laufbahnen 3 in der Symmetrieebene S liegt.

Die Laufschiene 1 ist primär für die in Fig. 1 und 2 dargestellte Betriebslage gedacht, in der der Tragsteg 15 vertikal steht. Bei einer anderen Einbaulage des Laufstreckenprofils 20 (Fig. 2), z. B. in einer Behälterförderstrecke 63, 67 gemäß den Fig. 12a,b um 90° gedreht, können die Laufrollen 54, 55 des jeweiligen Bügels 57 auch gleichzeitig auf den Laufbahnen 3 der Laufschiene und des Tragprofils 21 laufen. Die neutrale Faser des Querschnitts der alleine eingesetzten Laufschiene 1 liegt annähernd im Quersteg 4 oder unmittelbar an dessen Oberfläche, während sie im Laufstreckenprofil 20 in etwa in der Längsmittelachse im Tragsteg 15 liegt.

Bei dem im Fig. 2 dargestellen Laufstreckenprofil 20, das als Ganzes als Strangpreßprofil einstückig hergestellt ist, liegt das Tragprofil 21 spiegelbildlich zur Laufschiene 1 und hat annähernd denselben Querschnitt wie dieses. Die tatsächliche Lage der neutralen Faser richtet sich u.a. nach der Asymmetrie der Durchbrechungen 16 im Tragsteg 15. Der obere Durchbrechungsrand 17' jeder Durchbrechung 16 liegt vom Tragprofil 21 weiter entfernt als der untere Durchbrechungsrand 16 von der Laufschiene 1. Die Durchbrechungen 16 können Langlöcher oder auch kreisrund sein. Der Tragsteg 15 geht über die Länge des Laufstreckenprofils 20 durch. Innerhalb ein- und derselben Förderstrecke (siehe z. B. Fig. 13) kann das Laufstreckenprofil entweder mit dem Tragprofil 21 oben oder mit der Laufschiene 1 oben eingesetzt sein, wobei dann das Tragprofil 21 die eigentliche Laufschiene bildet. Die jeweils gewählte Einbaulage hängt u.a. davon ab, ob mit der Asymmetrie der Durchbrechungen 16 ein Aushänge- oder ein Aushängesperrbereich geschaffen werden soll, wie später erläutert wird.

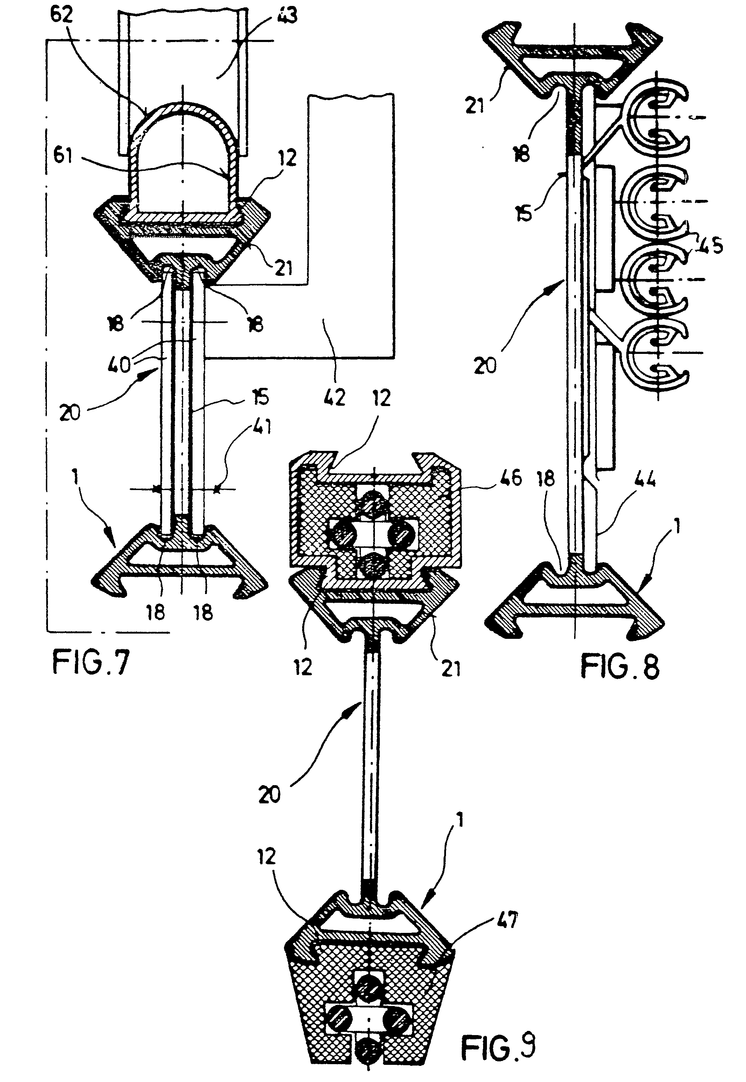

Auf den Laufbahnen 3 der Laufschiene 1 von Fig. 1 könnten Kunststofflaufschichten aufgebracht sein, die dann zweckmäßigerweise in die Längsnuten 18 und die Schwalbenschwanznut 12 formschlüssig eingehängt werden. Das Laufstreckenprofil 20 gemäß Fig. 2 kann durch in die Schwalbenschwanznut 12 des Tragprofils 21 oder in der (anderen Einbaulage) der Laufschiene 1 eingebrachte Haltestücke 73, z. B. Fig. 14, an einer Abstützung, z. B. einem Stützgerüst oder Stützrost 70 gemäß Fig. 13, befestigt sein, oder auch mit einem die Schenkel des Tragprofils 21 außen umgreifenden Befestigungselement. Zu einer Seitenabhängung können auch Halteelemente 40, 42 (Fig.7) in die Längsnuten 18 eingreifen.

Bei der Ausführungsform des Laufstreckenprofils 20 gemäß Fig. 3a ist das Tragprofil 21 mit einer Schiene 22 vereinigt, z. B. durch in die Schwalbenschwanznuten 12 eingesteckte Verbindungsstücke 58 oder durch Befestigungsschrauben in der Symmetrieebene S, wodurch die Steifigkeit und Belastbarkeit des Laufstreckenprofils 20 erhöht wird. Die Schiene 22 entspricht im Profil annähernd der Laufschiene 1 bzw. dem Tragprofil 21. Allerdings hat das Profil der Schiene 22 hier keinen Tragsteg 15, sondern eine oben offene Schwalbenschwanznut 23 für Einhängeteile und einen ebenen Steg 5', der dem Quersteg 4 näherliegt, als der Steg 5 der Quersteg 4 bei der Laufschiene gemäß Fig. 1.

Bei der Ausführungsform von Fig. 3b ist die Schiene 22 an der Laufschiene 1 befestigt, z. B. durch Befestigungselemente 25 in der Symmetrieebene, so daß ein Hohlraum 24 freibleibt. Die Schiene 22 stützt sich an den Flächen 10 der Vorsprünge 7 der Laufschiene 1 ab. Der Rollenbügel 57 kann trotz der Schiene 22 benutzt werden.

Die Laufschiene 1 gemäß Fig. 4a hält in der Schwalbenschwanznut 12 ein einflügeliges Laufprofil 27, das mit einer Laufbahn 26 zusammen mit der Laufbahn 3 ein Laufprofil für ein Rollensystem mit hochkant stehender Rolle 32 zeigt. Es kann dies die Rolle 32 eines seitenabgehängten Rollenbügels 57 sein. Wichtig ist, daß hier hintereinander und gleichzeitig die Rollenpaare 53 mit ihren die Laufbahn 28 seitlich berührungslos übergreifenden Rollenbügeln 57 und die Rollen 32 mit ihren seitlich herabhängenden Rollenbügeln 57 benutzt werden können.

In Stoßfugen aneinander stoßender Laufstreckenprofile können (Fig. 4a) in die Längsnuten 18 Kupplungs- oder Zentrierstifte 26 eingesetzt sein.

Bei der Ausführungsform der Fig. 4b ist ein zweiflügeliges Laufprofil 27' mit zwei Laufbahnen 28 eingesetzt, so daß an beiden Seiten der Laufschiene 1 hochkant stehende Laufrollen 32 mit ihrem Rollenbügel 57 laufen können. Auch hier können gleichzeitig auch die Laufrollenpaare 3 gemäß Fig. 5a benutzt werden. Die Laufprofile 27", 27 können auch von vornherein einstückig in die Laufschiene 1 integriert sein, falls grundsätzlich der Betrieb mit verschiedenen Rollensystemen gewünscht wird.

Fig. 5a zeigt, wie die Laufrollen 54 und 55 des Laufrollenpaares 53 auf der Laufschiene 1 abgestützt sind. Die mit ihren schräg stehenden Achsen 56 durch den Bügel 57 gehaltenen Laufrollen 54, 55 begrenzen mit ihren Umfängen einen Aushängespalt mit einer Aushängespaltweise A, die so bemessen ist, daß das Laufrollenpaar 53 von der Laufschiene 1 gemäß Fig. 1 und auch gemäß Fig. 5a an sich ausgehängt werden kann, indem das Laufrollenpaar 53 angehoben und dann um ca. 90° gedreht und seitlich abgezogen wird. Zu diesem Zweck ist (Fig. 1) der Abstand zwischen der Unterseite des Querstegs 4 und dem unteren Durchbrechungsrand 17 kleiner als die Aushängespaltweite A. Bei der Ausführungsform von Fig. 5a ist allerdings eine Aushängesperre in Form eines Sperrteiles 29 vorgesehen, der in die Längsnut 18 der Laufschiene 1 eingesteckt und darin festgelegt ist. Er besitzt einen nach oben stehenden Rand, der das Aushängen des Laufrollenpaares 53 verhindert. Zum Aushängen ist unterhalb der Laufschiene 1 im Bügel 57 eine entsprechend geformte Ausnehmung vorgesehen.

Bei der Ausführungsform von Fig. 5b ist eine Aushängesperre in Form eines Klotzes 30 vorgesehen, der in die Schwalbenschwanznut 12 dort eingesetzt ist, wo ein Aushängen des Laufrollenpaares aus sicherheitstechnischen Gründen nicht erwünscht ist. Der Klotz 30 ragt so weit unter die Unterseite der Laufschiene 1, daß das Laufrollenpaar 53 nicht seitlich weggezogen werden kann.

Bei der Ausführungsform von Fig. 5c ist das zusätzliche Laufprofil 27' von Fig. 4b als Formstück 31 ausgebildet, das einen erhöhten Abschnitt 34 als Aushängesperre auch eines anderen Rollensystems mit vertikal stehenden Rollen 32, bildet, die auf den Laufbahnen 33 und 3 läuft. Der strichpunktiert angedeutete Bügel 57, der an den Laufrollen 32 hängt, läßt sich im Bereich des erhöhten Abschnittes 34 nicht so weit anheben, daß die Laufrollen 32 über die Laufbahnen 33 hinweggehoben werden könnten. Der Abschnitt 34 sperrt auch, wenn nur eine seitenabgehängte Laufrolle 32 vorgesehen ist.

Bei Fig. 6a ist eine willkürlich betätigbare Aushängesperre in Form eines Schiebers 35 mit einem Betätigungsfortsatz 36 am Tragsteg 15 so angebracht, daß sie aus der Längsnut 18 ausgehoben und nach oben verschoben werden kann, bis das Laufrollenpaar 53 ausgehängt worden ist. Sitzt hingegen die Aushängesperre in der Längsnut 18, dann ist in diesem Bereich ein Aushängen durch die Durchbrechung 16 nicht mehr möglich.

Bei der Ausführungsform von Fig. 6b ist ein willkürliches Aushängen des Laufrollenpaares dann möglich, wenn ein Sperrteil 39 gegen die Kraft einer Feder 38 in die Schwalbenschwanznut 12 hineingedrückt wird, wo er mit einer Platte 37 gehalten ist.

Die Aushängesperren der Fig. 5a, 5b, 5c und 6a und 6b können praktisch an beliebiger Stelle der Laufschiene 1 oder des Laufstreckenprofil 20 angebracht sein.

Das Laufstreckenprofil 20 gemäß Fig. 7 ist gleichzeitig zur Benutzung zweier verschiedener Laufrollensysteme geeignet, weil in der Schwalbenschwanznut 12 des Tragprofils 21 ein Längsprofil 61 mit einer oben liegenden, konvex gewölbten Lauffläche 62 festgelegt ist, auf der eine senkrecht stehende Rolle 43 laufen kann, an der an der linken Seite ein strichliert angedeuteten Hängebügel angebracht ist. Das Laufstreckenprofil 20 ist seitenabgehängt, und zwar mittels Befestigungsteilen 40, die beiderseits des Tragsteges 15 in die Längsnuten 18 der Laufschiene

1 und des Tragprofils 21 eingesetzt und darin z. B. durch Befestigungselement 41, festgelegt sind. An den plattenförmigen Teilen 40 ist eine seitlich auskragende Seitenabhängung 42 angebracht. Bei der Ausführungsform von Fig. 7 können auf der Laufschiene 1 die Rollenpaare 53 gemäß Fig. 4a und gleichzeitig die Laufrollen 43 laufen.

Bei der Ausführungsform von Fig. 8 ist das Laufstreckenprofil 20 mit höherer Tragsteghöhe ausgelegt, wobei an einer Seite des Tragsteges 15 in die Längsnuten 18 der Laufschiene 1 und des Tragprofils 21 eine Halteplatte 44 eingesetzt und festgeschraubt ist, die Aufnahmen 45 für Stromkabel oder dergl. festhält. Es können dies, z. B., auch Schleif- und Kontakteinrichtungen für eine elektrisch betriebene Hängeförderbahn sein.

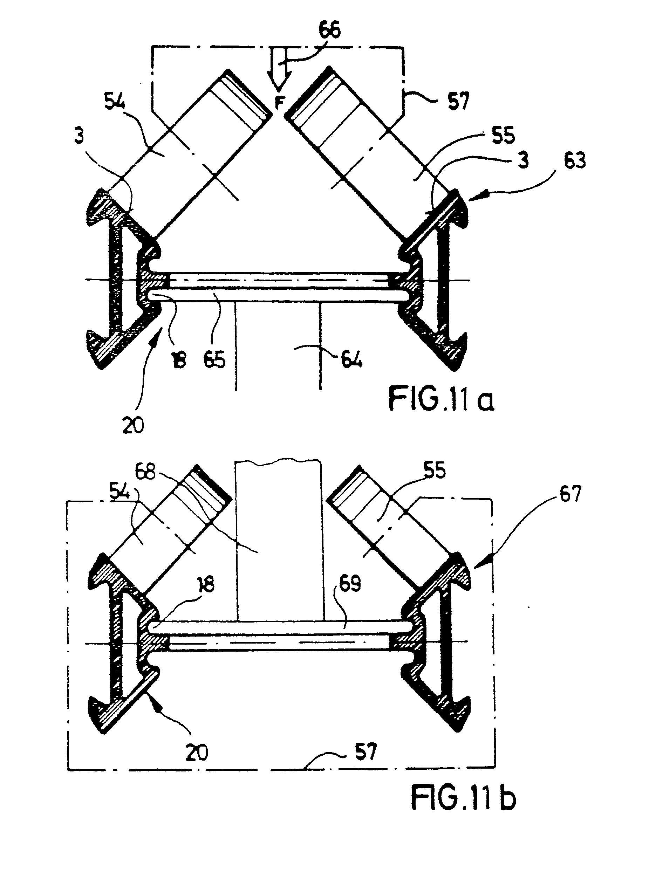

Bei der Ausführungsform von Fig 9 ist das Laufstreckenprofil 20 für eine Rundgliederkettenförderer bestimmt, wobei in der Schwalbenschwanznut 12 des Tragprofils 21 ein Kettenrücklauf 46 und in der Schwalbenschwanznut 12 der Laufschiene 1 ein Kettenvorlauf 47 befestigt ist.

Fig. 10 zeigt ein Laufstreckenprofil 20' einer Schrägförderstrecke, bei der in der Schwalbenschwanznut 12 des Tragprofils 21 ein Kettenrücklauf 50 und in der Schwalbenschwanznut 12 der Laufenschiene 1 ein Kettenvorlauf 48 angeordnet sind, in denen eine Kette 49 für auf der Laufschiene 1 laufende Laufrollenpaare geführt wird.

Aus den Fig. 11a und 11b ist eine um 90° gegenüber den vorher beschriebenen Betriebslagen gedrehte Betriebslage des Laufstreckenprofils 20 ersichtlich, wobei das Laufstreckenprofil 20 für eine Behältertransportanlage 63 oder 67 benutzt wird. Gemäß Fig. 12a wird das liegende Laufstreckenprofil 20 mit einem in die Nuten 18 eingebrachten und dort festgelegten Halteteil auf einer untenliegenden Abstützung gehalten. Die Laufrollen 54, 55, die im Rollenbügel 57 gehalten sind, laufen auf den obenliegenden, sich V-förmig öffnenden Laufbahnen 3 der Laufschiene und des Tragprofils des Laufstreckenprofils 20. Mit 66 ist die auf dem Rollenbügel 57 ruhende Last angedeutet.

Bei Fig. 11b ist das liegende Laufstreckenprofil 20 über ein Halteteil 69 in den Nuten 18 und eine Mittenaufhängung 68 aufgehängt, zu deren beiden Seiten die Laufrollen 54 und 55 des das Laufstreckenprofil 20 außen nach unten umgreifenden Rollenbügels laufen. Die Last bzw. der nicht dargestellte Behälter hängt am Rollenbügel 57.

Mit der vorstehend erwähnten Baureihenkonzeption der Laufschiene allein sowie in dem Laufstreckenprofil und mit den Schiener 22 werden mit geringem Aufwand höhere Belastungsgrenzen erreicht als bisher. Die Laufschiene 1 und der Tragsteg 15 mit dem Tragprofil 25 können nicht nur aus Leichtmetall oder Leichtmetallegierungen stranggepreßt sein, sondern es ist auch eine Blechpreß- und Schweiß- oder eine Kunststoffausbildung, z. B. glasfaserverstärkter Kunststoff, denkbar. Möglich wäre auch eine Verbundkonstruktion aus unterschiedlichen Materialien. Allen Ausführungsvarianten gemeinsam ist ein verhältnismäßig geringes Gewicht pro Längeneinheit, eine hohe Belastbarkeit und eine hohe Torsions- und Biegefestigkeit. Die Materialpaarung mit der jeweils verwendeten Laufrolle läßt sich hinsichtlich Verschleiß und Laufgeräusch einfach optimieren. Bei der geschaffenen Profilkonzeption lassen sich unterschiedliche Anbauteile und Montageelemente leicht anschließen. Das Profil der Laufschiene 1 gestattet die problemlose Ausbildung, von Auf- und Abwärtsstrecken, sowie deren Übergänge in horizontale Fahrtstrecken und die Ausbildung von Links- oder Rechtskurven. Aushängesperrgebereiche lassen sich genauso leicht vorsehen wie Aushängebereiche. Durch Anbringen von Einhängeteilen läßt sich die Förderstrecke beliebig auf Seiten-, Mitten- und Bodenabhängung einstellen, da die Profilform schon im Hinblick auf eventuelle Zusatzforderungen ausgelegt ist. Auch läßt sich eine Förderstrecke unter Verwendung der Laufschiene 1 oder des Laufstreckenprofils der vorhergehenden Fig. mit Zusatzeinrichtungen oder von vornherein an andere Rollensysteme anpassen, sogar so, daß mehrere Rollensysteme gleichzeitig einsetzbar sind. Auch Behältertransportanlagen mit liegender Anordnung des Laufstreckenprofils, d.h. um 90° gedreht, sind eine mögliche Anwendung. Für Elektrohängebahnen ist das Laufstreckenprofil auch gut verwendbar, weil am Tragsteg oder am Tragprofil ohne weiteres Schleifleitungen befestigt werden können. Da die Laufschiene 1 unterschiedlich geneigte Flächen besitzt, die ineinander übergehen, besteht die Möglichkeit, Laufrollen oder Betriebsmittel mit unterschiedlichen Anstellwinkeln der Laufrollen abwechselnd oder gleichzeitig zur verwenden. Bei angetriebenen Streckenabschnitten können neue Antriebskonzepte in das Profil des Streckenabschnittes integriert werden, z. B. Kettenförderer und dergl. Auch auf den Tragprofil können Betriebsmittel laufen, wenn die Förderstrecke seiten- oder mittenabgehängt ist. Ein Schweißen der Abschnitte kann entfallen, weil die Verbindung auf einfachere Weise genauso tragfähig wird. Eine Nachbehandlung oder Oberflächenveredelung ist bei Leichtmetall oder Leichtmetallegierung als Basismaterial entbehrlich. Es kann jedoch eine Eloxierung aus dekorativen Gründen und zur Oberflächenveredelung vorgesehen werden. Genauso ist aber eine individuelle Farbgebung zur Hervorhebung unterschiedlich wichtiger Fahrtstreckenabschnitte möglich.

## Patentansprüche

1. Laufschiene (1) für Hängeförderbahnen, insbesondere zum Teiletransport in der Textilindustrie, die im Querschnitt zwei dachförmig zueinanderweisende, oberseitig je eine Rollenlaufbahn (3) für ein Laufrollenpaar (53) tragende Schenkel (2) aufweist und mit einem in der Profilsymmetrieebene (S) liegenden oberen Tragsteg (15) mit einem Tragprofil (21) verbunden ist, wobei die Laufrollen (54, 55) des Laufrollenpaares einen Aushängespalt begrenzen und mit schräg zueinanderstehenden Achsen (56) in einem gemeinsamen Bügel (57) gehalten sind, mit dem sie unter Hochheben und Drehen quer zur Laufschiene (1) aus der Laufschiene aushängbar sind, *dadurch gekennzeichnet,* daß zwischen den Schenkeln (2) ein mit diesen einstückiger und im wesentlichen senkrecht zur Symmetrieebene (S) verlaufender Quersteg (4) vorgesehen ist, der mit den Schenkeln (2) einen geschlossenen Hohlraum (6) begrenzt.

2. Laufschiene nach Anspruch 1, *dadurch gekennzeichnet,* daß die Schenkel (2) oben in einem Querabstand von der Symmetrieebene enden und durch einen quer zur Symmetrieebene liegenden Steg (5) miteinander verbunden sind.

3. Laufschiene nach Anspruch 2, *dadurch gekennzeichnet,* daß der Tragsteg (15) am Steg (5) einstückig und längsdurchgehend angeformt ist.

4. Laufschiene nach den Ansprüchen 1 bis 3, *dadurch gekennzeichnet,* daß der Tragsteg (15) mit Durchbrechungen (16) ausgestattet ist, deren Größe mindestens der Größe einer Laufrolle (54, 55) entspricht, und daß in einem Aushängeabschnitt der Laufschiene bei wenigstens einer der Durchbrechungen (16) deren der Laufschiene zugewandter Durchbrechungsrand (17) von der Unterseite des Querstegs (4) - in Hochrichtung der Symmetrieebene (S) gesehen - einen Abstand aufweist, der kleiner ist als die Aushängespaltweite (A) des Rollenbügels.

5. Laufschiene nach Anspruch 4, *dadurch gekennzeichnet,* daß der den Laufflächen zugewandte Durchbrechungsrand (17) unterhalb des gedachten Schnittpunktes der Rollenlaufbahnen (3) liegt.

6. Laufschiene nach Anspruch 4, *dadurch gekennzeichnet,* daß in einem Aushängesperrabschnitt der Laufschiene (1) der Abstand zwischen dem der Laufschiene abgewandten Durchbrechungsrand (17') und der Unterseite des Querstegs (4) größer als die Aushängespaltweite (A) ist.

7. Laufschiene nach den Ansprüchen 2 bis 6, *dadurch gekennzeichnet,* daß im Steg (5) beiderseits des Tragstegs (15) nach oben offene, vorzugsweise hinterschnittene, Längsnuten (18) vorgesehen sind.

8. Laufschiene nach wenigstens einem der Ansprüche 1 bis 7, *dadurch gekennzeichnet,* daß die unteren Schenkelenden im Anschluß an den Quersteg (4) in Richtung zur Symmetrieebene (S) weisende Vorsprünge (7) tragen.

9. Laufschiene nach Anspruch 8, *dadurch gekennzeichnet,* daß an den Vorsprüngen (7) bzw. den freien Enden der Schenkel (2) sowohl schräge als auch zum Quersteg (4) parallele Anlageflächen (9, 10) für Abhängungen oder Abstützungen vorgesehen sind.

10. Laufschiene nach Anspruch 8, *dadurch gekennzeichnet,* daß die Vorsprünge (7) mit dem Quersteg (4) eine von der Schienenunterseite zugängliche hinterschnittene, insbesondere schwalbenschwanzförmige, Nut (12) begrenzen.

11. Laufschiene nach den Ansprüchen 8 bis 10, *dadurch gekennzeichnet,* daß der Quersteg (4) im Anschlußbereich an die Schenkel (2) untenliegende erhabene Führungs- und Auflageflächen (13) trägt.

12. Laufschiene nach einem der Ansprüche 1 bis 4, *dadurch gekennzeichnet,* daß im Hohlraum (6) eine Längsarmierung (8) vorgesehen ist.

13. Laufschiene nach einem der Ansprüche 1 bis 12, *dadurch gekennzeichnet,* daß, z. B. mit in der Schwalbenschwanznut (12) festgelegten Haltestücken (58), eine gegengleiche und im Querschnitt der Laufschiene (1) im wesentlichen gleiche Schiene (22) spiegelbildlich an der Laufschiene (1) und/oder am Tragprofil (21) befestigt ist, mit der die Belastbarkeit des Förderstreckenprofils (20) erhöht ist.

14. Laufschiene nach Anspruch 10, *dadurch gekennzeichnet,* daß in die Schwalbenschwanznut (12) ein einflügeliges oder zweiflügeliges Laufprofil (27, 27', 31) für nicht oder nur teilweise auf den Rollenlaufbahnen (3) der Schenkel (2) auf liegende Laufrollen (32) eines anderen Laufrollensystems einsetzbar ist, wobei der Rollenbügel (57) der auf den Laufbahnen (3) abgestützten Laufrollen (54, 55) das Laufprofil (27, 27', 31) berührungsfrei umgreift.

15. Laufschiene nach Anspruch 14, *dadurch gekennzeichnet,* daß zusätzlich zu den zwei dachförmig zueinander angestellten Laufbahnen (3) für mittenabgehängte Rollenbügel (57) wenigstens eine seitlich neben einer der Laufbahnen (3) liegende, sich nach außen und oben erstreckende Laufbahn (28) für eine Laufrolle (32) eines seitenabgehängten Rollenbügels (57) vorgesehen sind, derart, daß die Laufschiene alternativ und gleichzeitig mit mittenabgehängten oder/und seitenabgehängten Rollenbügeln befahrbar ist.

16. Laufschiene nach einem der Ansprüche 1 bis 15, *dadurch gekennzeichnet,* daß in einem Aushängesperrabschnitt entweder in einer der Längsnuten (18) neben dem Tragsteg (16) oder in der Schwalbenschwanznut (12) ein Sperrteil (30, 34, 35, 36, 39) herausnehmbar angebracht ist.

17. Laufschiene nach Anspruch 16, *dadurch gekennzeichnet,* daß der Sperrteil (35, 39), vorzugsweise gegen Federkraft, aus einer Sperrstellung in eine Aushängestellung bewegbar ist.

18. Laufschiene nach einem der Ansprüche 7 bis 17, *dadurch gekennzeichnet,* daß in Längsnuten

(18) der Laufschiene (1) und des Tragprofils (21) Befestigungsmittel (40) für eine Seiten-, Decken- bzw. Bodenabhängung oder Kupplungsmittel (26) für aneinander angeschlossene, jeweils aus Laufschiene (1), Tragsteg (16) und Tragprofil (21) bestehende, endliche Förderstreckenprofile (20) einbringbar sind.

19. Laufschiene nach einem der Ansprüche 7 bis 16, *dadurch gekennzeichnet,* daß in den Längsnuten (18) Halterungen (44, 45) für Zusatzeinrichtungen wie Stromversorgungs- oder Steuerkabel festlegbar sind.

20. Laufschiene nach einem der Ansprüche 10 bis 19, *dadurch gekennzeichnet,* daß in die Schwalbenschwanznuten (12) der Laufschiene (1) und in das Tragprofil (21) ein Kettenvorlauf bzw. -rücklauf (46, 47, 48, 50) einer Ketten-Hängeförderstrecke oder Ketten-Schrägförderstrecke eingesetzt ist.

21. Laufschiene nach einem der Ansprüche 1 bis 20, *dadurch gekennzeichnet,* daß sie aus Leichtmetall bzw. einer Leichtmetallegierung stranggepreßt ist.

22. Laufschiene nach einem der Ansprüche 1 bis 20, *dadurch gekennzeichnet,* daß sie aus Blech gewalzt oder geschweißt oder als Verbundkonstruktion ausgebildet ist.

23. Laufschiene nach einem der Ansprüche 1 bis 20, *dadurch gekennzeichnet,* daß sie aus einem glasfaserverstärkten Kunststoff stranggepreßt ist.


## Claims

1. Roller rail (1) for suspended conveyor tracks, in particular for the transport of parts in the textile industry, which in cross-section has two legs (2), which face one another forming a roof shape and which each support on their upper side a roller track (3) for a pair of rollers (53), and which is connected to a supporting profile (21) with an upper supporting web (15) which lies in the profile plane of symmetry (S), the rollers (54, 55) of the pair of rollers delimiting a removal gap and being held, with axes (56) which are inclined towards one another, in a common stirrup (57), with which they can be removed from the roller rail by lifting and turning transversely to the roller rail (1), characterized in that between the legs (2) a transverse web (4) is provided, which is integral with the latter and runs essentially perpendicularly to the plane of symmetry (S) and which with the legs (2) delimits a closed hollow space (6).

2. Roller rail according to Claim 1, characterized in that the legs (2) end at the top at a transverse distance from the plane of symmetry and are connected to one another by a web (5) which lies transverse to the plane of symmetry.

3. Roller rail according to Claim 2, characterized in that the supporting web (15) is moulded onto the web (5) in one piece and over the entire length.

4. Roller rail according to Claims 1 to 3, characterized in that the supporting web (15) is provided with openings (16), the size of which at least corresponds to the size of a roller (54, 55), and in that in a removal section of the roller rail, at at least one of the openings (16), the edge (17), which faces towards the roller rail, of the opening - seen in the vertical direction of the plane of symmetry (S) has a separation from the underside of the transverse web (4) which is smaller than the removal gap width (A) of the roller stirrup.

5. Roller rail according to Claim 4, characterized in that the edge (17), which faces towards the roller surfaces, of the opening lies underneath the imaginary point of intersection of the roller tracks (3).

6. Roller rail according to Claim 4, characterized in that in a removal stopping section of the roller rail (1) the distance between the edge (17'), which faces away from the roller rail, of the opening and the underside of the transverse web (4) is greater than the removal gap width (A).

7. Roller rail according to Claims 2 to 6, characterized in that in the web (5) on both sides of the supporting web (15), longitudinal grooves (18) are provided, which are open at the top and which are preferably undercut.

8. Roller rail according to at least one of Claims 1 to 7, characterized in that the lower ends of the legs, subsequent to the transverse web (4), bear projections (7) which point towards the plane of symmetry (S).

9. Roller rail according to Claim 8, characterized in that, on the projections (7) or the free ends of the legs (2), support surfaces (9, 10) are provided, which are both inclined as well as parallel to the transverse web (4) and which are for suspension devices or support devices.

10. Roller rail according to Claim 8, characterized in that the projections (7), with the transverse web (4), delimit a groove (12), which is accessible from the underside of the rail, undercut and in particular dovetail-shaped.

11. Roller rail according to Claims 8 to 10, characterized in that the transverse web (4), in the area of connection to the legs (2), bears underlying raised guide and support surfaces (13).

12. Roller rail according to one of Claims 1 to 4, characterized in that a longitudinal reinforcement (8) is provided in the hollow space (6).

13. Roller rail according to one of Claims 1 to 12, characterized in that, e.g. with holding pieces (58) secured in the dovetail groove (12), a diametrically opposed rail (22), which in cross-section is essentially the same as the roller rail (1) and by means of which the load carrying capacity of the conveying track profile (20) is raised, is fixed in the manner of a mirror image on the roller rail (1) and/or on the supporting profile (21).

14. Roller rail according to Claim 10, characterized in that, in the dovetail groove (12) a single-winged or double-winged roller profile (27, 27' (sic), 31) can be used for rollers (32) of another roller system which do not or only partially lie on the roller tracks (3) of the legs (2), the roller stirrup (57) of the rollers (54, 55) supported on the roller tracks (3) enclosing the roller profile (27, 27' (sic), 31) without contact.

15. Roller rail according to Claim 14, characterized in that, in addition to the two roller tracks (3) which face towards one another forming a roof shape and which are for centrally suspended roller stirrups (57), at least one roller track (28), which lies laterally next to one of the roller tracks (3), extends outwards and upwards and is for a roller (32) of a laterally suspended roller stirrup (57), are (sic) provided in such a manner that the roller track can be travelled upon alternatively and simultaneously with centrally suspended or/and laterally suspended roller stirrups.

16. Roller rail according to one of Claims 1 to 15, characterized in that, in a removal stopping section, a stopping piece (30, 34, 35, 36, 39) is removably arranged, either in one of the longitudinal grooves (18) next to the supporting web (16) or in the dovetail groove (12).

17. Roller rail according to Claim 16, characterized in that the stopping piece (35, 39), preferably against spring resistance, can be moved from a stopping setting to a removal setting.

18. Roller rail according to one of Claims 7 to 17, characterized in that, in longitudinal grooves (18) of the roller rail (1) and of the supporting profile (21), fixing means (40) for lateral, ceiling or floor suspension, or connection means (26), for finite conveying track profiles (20), which are connected to one another and in each case consist of roller rail (1), supporting web (16) and supporting profile (21), can be introduced.

19. Roller rail according to one of Claims 7 to 16, characterized in that brackets (44, 45), for supplementary devices such as power supply or control cables, can be fixed in the longitudinal grooves (18).

20. Roller rail according to one of Claims 10 to 19, characterized in that a chain advance travel section or return travel section (46, 47, 48, 50) of a suspended chain conveying track or a slope chain conveying track is introduced into the dovetail grooves (12) of the roller rail (1) and into the supporting profile (21).

21. Roller rail according to one of Claims 1 to 20, characterized in that it is extruded from light metal or a light metal alloy.

22. Roller rail according to one of Claims 1 to 20, characterized in that it is rolled or welded from sheet steel or is executed as a composite construction.

23. Roller rail according to one of Claims 1 to 20, characterized in that it is extruded from a glass-fibre reinforced plastic.

**Revendications**

1. Glissière (1) pour voies de transport suspendues, en particulier pour le transport de pièces dans l'industrie textile qui comprend, en coupe transversale, deux branches (2) qui convergent en forme de toit et portent respectivement à leur face supérieure une bande de roulement (3) pour une paire de rouleaux de roulement (53), et qui est reliée par une nervure de support (15) placée dans le plan de symétrie (S) du profil, à un profil de support (21), les rouleaux de roulement (54, 55) de la paire de rouleaux de roulement délimitant une fente de décrochage et étant maintenus avec des axes (56) inclinés l'un vers l'autre dans un étrier (57) commun à l'aide duquel ils peuvent être décrochés de la glissière en les soulevant et en les tournant transversalement à la glissière (1), *caractérisée en ce* qu'entre les branches (2) est prévue une traverse (4) conformée en une seule pièce avec lesdites branches et s'étendant sensiblement perpendiculairement au plan de symétrie (S), laquelle délimite avec les branches (2) un espace creux fermé (6).

2. Glissière selon la revendication 1, caractérisée en ce que les branches (2) se terminent en haut à une distance transversale du plan de symétrie et qu'elles sont reliées l'une à l'autre par une traverse (5) placée transversalement au plan de symétrie.

3. Glissière selon la revendication 2, caractérisée en ce que la nervure de support (15) est conformée en une seule pièce et sur toute la longueur sur la traverse (5).

4. Glissière selon l'une des revendications 1 à 3, caractérisée en ce que la nervure de support (15) présente des découpures (16) dont la grandeur correspond au moins à la grandeur d'un rouleau de roulement (54, 55) et que dans un tronçon de décrochage de la glissière le bord (17) d'au moins l'une des découpures (16) dirigé vers la glissière se situe à une distance de la face inférieure de la traverse (4) qui - vu vers le haut dans le plan de symétrie (S) - est plus petite que la largeur de la fente de décrochage (A) de l'étrier de rouleaux.

5. Glissière selon la revendication 4, caractérisée en ce que le bord (17) de la découpure dirigé vers les surfaces de roulement se situe en dessous de l'intersection imaginaire des bandes de roulement des rouleaux (3).

6. Glissière selon la revendication 4, caractérisée en ce que, dans un tronçon d'interdiction de décrochage de la glissière (1), la distance entre le bord de découpure (17') opposé à la glissière et la face inférieure de la traverse (4) est plus grande que la largeur de la fente de décrochage (A).

7. Glissière selon l'une des revendications 2 à 6, caractérisée en ce que dans la traverse (5) des rainures longitudinales (18) ouvertes vers le haut, de préférence contredépouillées, sont prévues de part et d'autre de la nervure de support (15).

8. Glissière selon l'une des revendications 1 à 7, caractérisée en ce que les extrémités inférieures des branches portent des saillies (7) dirigées vers le plan de symétrie (S) et se raccordant à la traverse (4).

9. Glissière selon la revendication 8, caractérisée en ce que sur les saillies (7) et respectivement les extrémités libres des branches (2) sont prévues des surfaces d'appui (9, 10) inclinées aussi bien que parallèles par rapport à la traverse (4), pour des suspentes ou appuis.

10. Glissière selon la revendication 8, caractérisée en ce que les saillies (7) délimitent avec la traverse (4) une rainure (12) contre-dépouillée, notamment en queue d'aronde, qui est accessible par la face inférieure de la glissière.

11. Glissière selon l'une des revendications 8 à 10, caractérisée en ce que, dans la zone de raccordement aux branches (2), la traverse (4) présente en relief des surfaces de guidage et d'appui inférieures (13).

12. Glissière selon l'une des revendications 1 à 4, caractérisée en ce qu'une armature longitudinale (8) est prévue dans l'espace creux (6).

13. Glissière selon l'une des revendications 1 à 12, caractérisée en ce que, par exemple au moyen d'éléments de retenue (58) fixés dans la rainure en queue d'aronde (12), un rail (22) diamétralement opposé et présentant sensiblement la même section transversale que la glissière (1) est monté en image de miroir sur ladite glissière (1) et/ou sur le profil de support (21) de manière à augmenter la capacité de charge du profil de voie de transport (20).

14. Glissière selon la revendication 10, caractérisée en ce que dans la rainure en queue d'aronde (12) peut être inséré un profilé de roulement (27, 27', 31) à une ou deux ailes pour des rouleaux de roulement (32) d'un autre système de rouleaux qui ne reposent pas ou qui reposent seulement en partie sur les bandes de roulement (3) des branches (2), l'étrier (57) des rouleaux de roulement (54, 55) qui s'appuient sur les bandes de roulement (3) entourant sans contact le profilé de roulement (27, 27', 31).

15. Glissière selon la revendication 14, caractérisée en ce que, en plus des deux bandes de roulement (3) inclinées l'une vers l'autre en forme de toit et destinées à des étriers de rouleaux (57) accrochés au milieu, il est prévu au moins une bande de roulement (28) pour un rouleau de roulement (32) d'un étrier de rouleaux (57) accroché latéralement, qui se situe à côté de l'une des bandes de roulement (3) et s'étend vers l'extérieur et vers le haut, de sorte que la glissière peut être utilisée alternativement ou simultanément avec des étriers de rouleaux accrochés au milieu et/ou sur le côté.

16. Glissière selon l'une des revendications 1 à 15, caractérisée en ce que, dans un tronçon d'interdiction de décrochage, un élément de blocage (30, 34, 35, 36, 39) est monté de manière amovible dans l'une des rainures longitudinales (18), à côté de la nervure de support (15), ou bien dans la rainure en queue d'aronde (12).

17. Glissière selon la revendication 16, caractérisée en ce que l'élément de blocage (35, 39) peut être déplacé, de préférence contre la force d'un ressort, d'une position de blocage dans une position de décrochage.

18. Glissière selon l'une des revendications 7 à 17, caractérisée en ce que dans les rainures longitudinales (18) de la glissière (1) et du profil de support (21) peuvent être insérés des moyens de fixation (40) pour un accrochage sur le côté, au plafond et respectivement au sol ou des moyens d'accouplement (26) pour des profils de voie de transport (20) finis raccordés les uns aux autres et constitués respectivement de la glissière (1), de la nervure de support (15) et du profil de support (21).

19. Glissière selon l'une des revendications 7 à 16, caractérisée en ce que des fixations (44, 45) pour des dispositifs additionnels tels que des câbles d'alimentation ou de commande peuvent être montées dans les rainures longitudinales (18).

20. Glissière selon l'une des revendications 10 à 19, caractérisée en ce qu'un brin d'avance et respectivement de retour de chaîne (46, 47, 48, 50) d'une voie de transport à chaîne suspendue ou d'une voie de transport à chaîne inclinée est placé dans les rainures en queue d'aronde (12) de la glissière (1) et dans le profil de support (21).

21. Glissière selon l'une des revendications 1 à 20, caractérisée en ce qu'elle est filée en métal léger et respectivement en un alliage léger.

22. Glissière selon l'une des revendications 1 à 20, caractérisée en ce qu'elle est réalisée en tôle laminée ou soudée ou sous la forme d'une construction composite.

23. Glissière selon l'une des revendications 1 à 20, caractérisée en ce qu'elle est réalisée par extrusion d'une matière plastique renforcée à la fibre de verre.

FIG.1

FIG.3a

FIG.2

FIG.3b

FIG.4a

FIG.4b

FIG.5a

FIG.5c

FIG.5b

FIG.6a

FIG.6b

FIG.10

FIG.7

FIG.8

FIG.9

FIG.11 a

FIG.11 b